# EUROPEAN PATENT APPLICATION

(11) **EP 1 603 008 A1**
(43) Date of publication of application: **07.12.2005**
(21) Application number: 05250575.7
(22) Date of filing: 02.02.2005
(51) Int. Cl.: G06F 1/16, G06F 1/26

(54) **Portable power supply with computer port**

(30) Priority: 02.06.2004 CN 200410473389
(71) Applicant: Advanced-Connected Inc., Hsin-Tien, Taipei Hsien (TW)
(72) Inventor: Cao, Zheng-Fang, Taipei Hsien Taiwan R.O.C. (TW); Tian, Yong-Jian, Taipei Hsien Taiwan R.O.C. (TW)
(74) Representative: Pratt, David Martin

(57) **Abstract**

A portable power supply comprises a first compartment, a second compartment disposed on the first compartment, an electronic device removably disposed in the first compartment, a power supply assembly disposed in the second compartment, a power indicator disposed on the second compartment for displaying remaining power of the power supply assembly, a charging socket, a power socket for connecting to and supplying power to the electronic device via a cord, and a computer port for connecting to a computer via a cable for communicating data between the computer and the electronic device. The power supply assembly comprises a battery, a battery switching member, a booster circuit, a charging circuit, a battery protecting circuit, and a battery power sensing circuit.

## Description

### BACKGROUND OF THE INVENTION

### 1. Field of the Invention

The present invention relates to power supplies and more particularly to a portable, rechargeable power supply having a computer port.

### 2. Description of Related Art

A wide variety of electronic products (e.g., cellular phones, PDAs (personal digital assistants), palmtops, MP3 players, etc.) are available due to technological advancements. These products bring a lot of convenience to our daily life. Typically, a rechargeable battery is provided in the product. For prolonging the operating time of the product after a full charge, the manufacturers have spent much time and money in developing a battery having a larger capacity while trying to decrease the energy consumption of the product. It is understood that a charger is of no use if power of the product is consumed in an outdoor environment. Thus, it is desirable to provide a portable power supply for a portable electronic product and preferably, the power supply is provided with a computer port.

### SUMMARY OF THE INVENTION

It is an object of the present invention to provide a portable power supply having a first compartment for receiving an electronic device having a consumed battery and a second compartment for receiving a power supply assembly for charging the electronic device through a power cord for prolonging an operating time of the electronic device in an outdoor environment. Moreover, a charging of both the power supply assembly and the electronic device can be made by interconnecting a charging socket of the power supply assembly and an external power source via a cord.

It is another object of the present invention to provide a portable power supply having a computer port such that the electronic device can communicate signals including video signals with an external computer via a cable interconnected the computer port and, for example, monitor of the computer.

It is a further object of the present invention to provide a portable power supply having a power indicator disposed on the second compartment such that a user can easily determine the remaining power of a battery of the power supply assembly.

To achieve the above and other objects, the present invention provides a portable power supply comprising a housing including a first compartment and a second compartment disposed on a top of the first compartment; an electronic device disposed in the first compartment; a power supply assembly disposed in the second compartment; a power indicator disposed on a top of the second compartment for displaying remaining power of the power supply assembly; a charging socket disposed on the second compartment for electrically connecting to a charger via a first cord; a power socket disposed on the second compartment for connecting to and supplying power to the electronic device via a second cord; and a computer port disposed on the second compartment for connecting to an external device via a cable so as to communicate data between the electronic device and the external device.

In one aspect of the present invention the power supply assembly comprises a rechargeable battery; a battery switching member adapted to activate by turning on a switch; a booster circuit adapted to increase voltage of power sent from the battery to a predetermined value for enabling the electronic device; a charging circuit electrically connected to the charging socket for obtaining an external AC power and converting AC into DC; a battery protecting circuit adapted to break the power supply assembly when current exceeds a predetermined maximum value; and a battery power sensing circuit adapted to sense remaining power of the battery in response to activating the battery switching member and send an indicator of the remaining power of the battery to the power indicator.

The above and other objects, features and advantages of the present invention will become apparent from the following detailed description taken with the accompanying drawings.

### BRIEF DESCRIPTION OF THE DRAWINGS

FIG. 1 is a perspective view of a preferred embodiment of portable power supply according to the invention;
FIG. 2 is another perspective view of the power supply with a portable electronic product mounted therein; and
FIG. 3 is a block diagram of power supply assembly circuitry according to the invention.

### DETAILED DESCRIPTION OF THE PREFERRED EMBODIMENTS

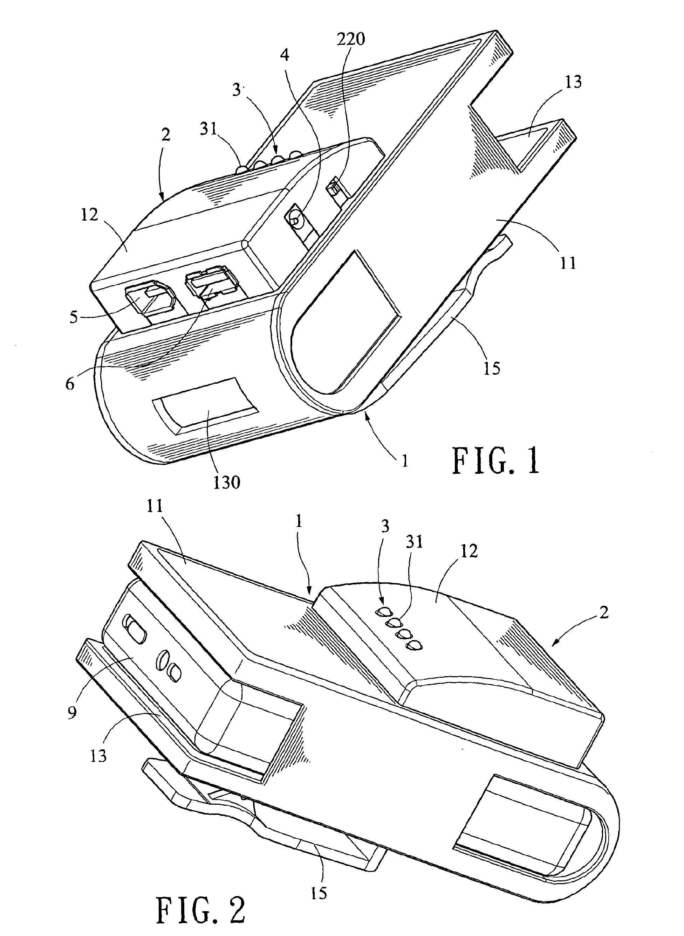

Referring to FIGS. 1 to 3, there is shown a portable power supply constructed in accordance with a preferred embodiment of the invention. The power supply is implemented as a substantially parallelepiped housing 1 including a main first compartment 11 having a first opening 13 at one end and a second opening 130 at the other end, a second compartment 12 formed on a top of the first compartment 11, and a clip 15 for hanging on the pocket or the belt while carrying the power supply. The power supply further comprises a power supply assembly 2, a power indicator 3, a charging socket 4, a power socket 5, and a computer port 6. Each component will be described in detailed below.

A portable electronic device 9 (e.g., cellular phone or the like) is adapted to insert through the first opening 13 into the first compartment 11 for temporarily storage. The second compartment 12 is adapted to receive the power supply assembly 2. The power indicator 3 is provided on a top surface of the second compartment 12. A switch 220 is provided on a side of the second compartment 12. The charging socket 4 is provided adjacent the switch 220 at the same side. The charging socket 4 is implemented as a cylindrical receptacle having an axial prong the same as a typical power socket. The power socket 5 and the computer port 6 are provided on one end of the second compartment 12. For charging the power supply (i.e., the power supply assembly 2), connect a charger (not shown) to a power outlet. Next, plug the end of a cord extended from the charger into the charging socket 4. The power supply starts to charge immediately.

For supplying power from the power supply assembly 2 to the consumed electronic device 9, connect one end of a power cord to the power socket 5 and the other end thereof to a charging socket (not shown) of the electronic device 9 via the second opening 130. Next, turn on the switch 220. The power supply assembly 2 starts to charge the electronic device 9 (i.e., rechargeable battery of the electronic device 9) immediately. The power socket 5 is implemented as an IEEE 1394 connector in the embodiment (see FIG. 1).

A cable can be interconnected the computer port 6 and an external computer such that the electronic device 9 can communicate data with the computer. The computer port 6 is implemented as a USB (Universal Serial Bus) port in the embodiment (see FIG. 2).

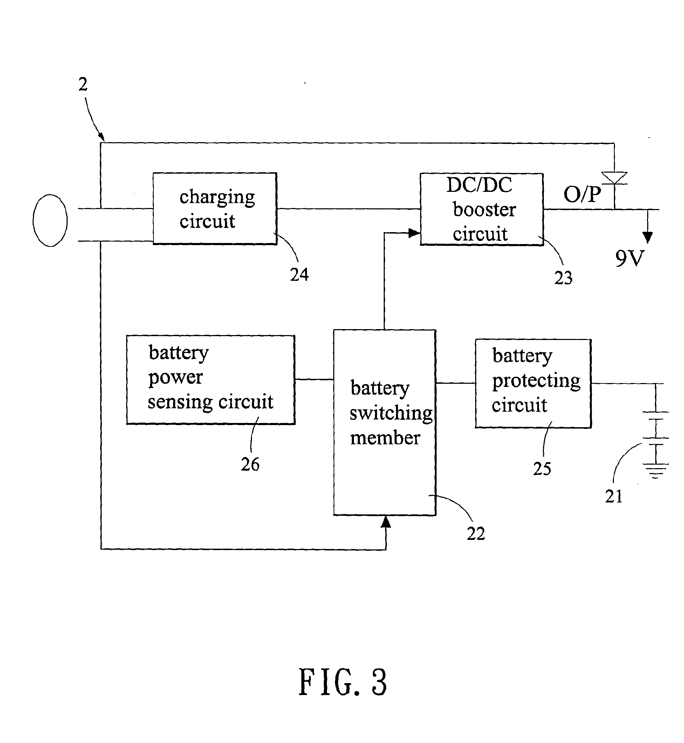

Referring to FIG. 3, the power supply assembly 2 comprises a rechargeable battery 21, a battery switching member 22, a DC/DC booster circuit 23, a charging circuit 24, a battery protecting circuit 25, and a battery power sensing circuit 26. The battery protecting circuit 25 is adapted to break the circuit when current exceeds a maximum value. The DC/DC booster circuit 23 is adapted to increase voltage to a predetermined value (e.g., 9V). The battery switching member 22 is activated by turning on the switch 220. The battery power sensing circuit 26 is adapted to sense remaining power of the battery 21 and send an indicator of the remaining power of the battery 21 to the power indicator 3. In a first charging loop, power is supplied from the battery 21 to the consumed electronic device 9 via the battery protecting circuit 25, the battery switching member 22, and the DC/DC booster circuit 23 after turning on the switch 220 (i.e., turning on the battery switching member 22). In a second charging loop, after turning on the switch 220 (i.e., turning on the battery switching member 22) when the battery 21 is low, external AC power is fed to the charging circuit 24 and is converted into DC which is then sent to the battery 21 via the battery switching member 22 and the battery protecting circuit 25. In a third charging loop after turning on the switch 220 (i.e., turning on the battery switching member 22), DC is fed from the charging circuit 24 to the DC/DC booster circuit 23 for changing its voltage to the predetermined value (e.g., 9V) prior to supplying to the consumed battery of the electronic device 9 directly. Note that the second charging loop, the third charging loop, or both of them can occur at the same time.

The power indicator 3 comprises a plurality of illumination members (e.g., four LEDs (light-emitting diodes)) 31 served as a charge indicator of the battery 21. A user may turn on the switch 220 (i.e., turning on the battery switching member 22) to enable the battery power sensing circuit 26. Next, none of the LEDs 31 are lit if the battery 21 is completely consumed, one, two, or three LEDS 31 are lit depending on the remaining power of the battery 21, or four LEDs 31 are lit if the battery 21 is completely charged. This enables a user to easily determine the remaining power of the battery 21.

While the invention herein disclosed has been described by means of specific embodiments, numerous modifications and variations could be made thereto by those skilled in the art without departing from the scope and spirit of the invention set forth in the claims.

## Claims

1. A portable power supply comprising:
a housing including a first compartment and a second compartment disposed on a top of the first compartment;
an electronic device disposed in the first compartment;
a power supply assembly disposed in the second compartment;
a power indicator disposed on a top of the second compartment for displaying remaining power of the power supply assembly;
a charging socket disposed on the second compartment for electrically connecting to a charger via a first cord;
a power socket disposed on the second compartment for connecting to and supplying power to the electronic device via a second cord; and
a computer port disposed on the second compartment for connecting to an external device via a cable so as to communicate data between the electronic device and the external device.

2. The power supply of claim 1, wherein the housing further comprises a first opening at one end in communication with the first compartment, a second opening at the other end in communication with the first compartment, and a switch disposed on the second compartment.

3. The power supply of claim 2, wherein the power supply assembly comprises:
a rechargeable battery;
a battery switching member adapted to activate by turning on the switch;
a booster circuit adapted to increase voltage of power sent from the battery to a predetermined value for enabling the electronic device;
a charging circuit electrically connected to the charging socket for obtaining an external AC power and converting AC into DC;
a battery protecting circuit adapted to break the power supply assembly when current exceeds a predetermined maximum value; and
a battery power sensing circuit adapted to sense remaining power of the battery in response to activating the battery switching member and send an indicator of the remaining power of the battery to the power indicator.

4. The power supply of claim 3, wherein in a first charging loop power is supplied from the battery to the consumed electronic device via the battery protecting circuit, the battery switching member, and the booster circuit responsive to turning on the switch.

5. The power supply of claim 3, wherein in a second charging loop DC is sent from the charging circuit to the battery via the battery switching member and the battery protecting circuit responsive to turning on the switch.

6. The power supply of claim 3, wherein in a third charging loop DC is sent from the charging circuit to the booster circuit for changing DC voltage to the predetermined value prior to supplying to the electronic device responsive to turning on the switch.

7. The power supply of claim 3, wherein the power indicator is controlled by the battery switching member for displaying the remaining power of the battery.

8. The power supply of claim 1, wherein the power indicator comprises a plurality of illumination members.

9. The power supply of claim 3, wherein the charging socket is a cylindrical receptacle having an axial prong to electrically connect to an outer charger via a cord.

10. The power supply of claim 1, **characterized in that** the power socket is an IEEE 1394 connector.

11. The power supply of claim 1, **characterized in that** the computer port is a USB port.

12. The power supply of claim 1, wherein the power socket supplying power to the electronic device via the second cord and the computer port connecting to an external device via a cable so as to communicate data between the electronic device and the external device.
